# EUROPÄISCHE PATENTSCHRIFT

(11) **EP 1 466 089 B1**
(45) Veröffentlichungstag und Bekanntmachung des Hinweises auf die Patenterteilung: **15.08.2007**
(21) Anmeldenummer: 02805312.2
(22) Anmeldetag: 11.12.2002
(51) Int. Cl.: F03B 13/10, F03B 11/00

(54) **STRÖMUNGSROHR MIT WASSERTURBINE VON VERÄNDERLICHEM QUERSCHNITT**
FLOW PIPE COMPRISING A WATER TURBINE HAVING A VARIABLE CROSS-SECTION
TUBE D'ECOULEMENT DOTE D'UNE TURBINE A EAU DE SECTION VARIABLE

(30) Priorität: 12.12.2001 DE 10160916
(43) Veröffentlichungstag der Anmeldung: 13.10.2004
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2002/014030
(87) Internationale Veröffentlichungsnummer: WO 2003/054386

(56) Entgegenhaltungen:
- WO-A-89/00646
- DE-A- 19 808 328
- FR-A- 789 467
- FR-A- 1 244 750
- US-A- 3 535 540
- US-A- 4 025 228

## Beschreibung

Bei Wasserkraftwerken ist es allgemein bekannt, dass das Wasser, bevor es auf die Turbine des Wasserkraftwerks trifft und dort seine Energie an die Turbine abgibt, durch ein Rohr strömt. Je nach Art des Wasserkraftwerks kann es sich bei diesem Rohr um ein Fallrohr handeln, durch welches dass Wasser je nach den örtlichen Gegebenheiten abhängig von der Fallhöhe und der Wassermenge strömt. Ein solches Wasserkraftwerk ist beispielsweise aus der WO 89/00646 bekannt.

Nachdem das Wasser einen Teil seiner Energie an die Turbine abgegeben hat, fließt dass Wasser weiter in einen Fluss ab.

Die Turbine des Wasserkraftwerks ist regelmäßig mit einem Generator gekoppelt, mit dem die Bewegungsenergie der Turbine in elektrische Energie umgewandelt wird, und dann die ihrerseits in ein Energieversorgungsnetz eingespeist wird.

Oftmals weist ein Wasserkraftwerk nicht nur eine Turbine, sondern auch gleich mehrere Turbinen auf und das Wasser wird nicht nur über ein einziges Rohr, sondern über mehrere Rohre an verschiedene Turbinen herangeführt. Je nach anfallender Wassermenge wird dann eine entsprechende Steuerung der Wassermenge für die einzelnen Rohre vorgenommen, so dass im Wasserkraftwerk ein optimaler Wirkungsgrad erzielt wird.

Die Turbinen sind jeweils im Fallrohr selbst oder in der Verlängerung des Fallrohrs im Strömungsrohr angeordnet.

Der Durchtrittsquerschnitt für das Wasser im Fallrohr, auch im Bereich Turbine (Wasserrad) im Strömungsrohr, ist hierbei auf vorbestimmte Werte festgelegt.

Die Fliessgeschwindigkeit des Wassers im Bereich der Turbinen wird hierbei regelmäßig durch den Volumenstrom eingestellt, also durch die Menge des im Fall- bzw. Strömungsrohrs eingeleiteten Wassers. Je nach dem eingestellte Generatormoment kann dann die gewünschte Leistung aus dem System entnommen werden.

Aufgabe der Erfindung ist es nunmehr, Mittel vorzusehen, mittels denen die Strömungsgeschwindigkeit des Wassers (Fluids) im Bereich der Turbine eingestellt werden kann.

Die Aufgabe wird erfindungsgemäß mit einem Strömungsrohr mit den Merkmalen nach Anspruch 1 gelöst. In Anspruch 2 ist ein Wasserkraftwerk mit dem erfindungsgemäßen Strömungsrohr beschrieben.

Erfindungsgemäß ist die Turbine so ausgestattet, dass sie einen veränderlichen Querschnitt des Verdrängungskörpers aufweist.

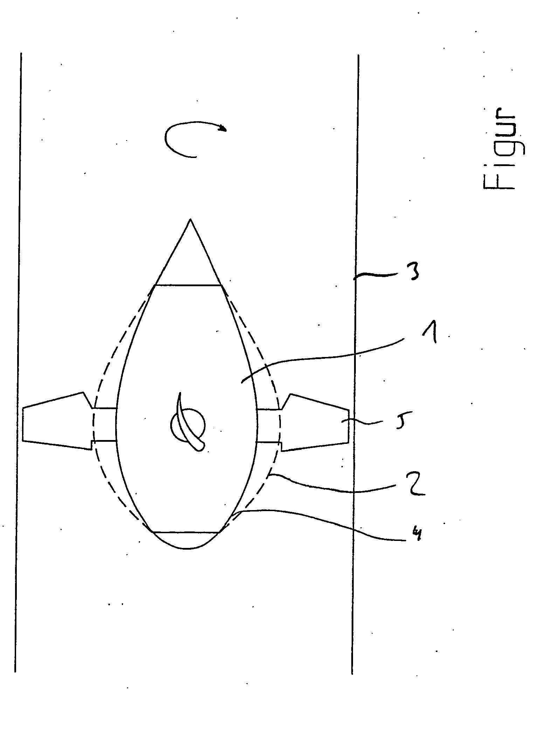

Wie in der Figur dargestellt, besteht die Turbine 4 (Wasserrad) aus einem Verdrängungskörper 1, auf dem außenseitig die Schaufeln 5 (Rotorblätter) der Turbine aufgesetzt sind. Die Turbine 4 mit den Schaufeln 5 kann sich im Strömungsrohr 3 drehen und somit ein entsprechend angekoppelten Generator (nicht in der Figur dargestellt) antreiben.

Wie in dem dargestellten Beispiel zu erkennen, ist der Querschnitt des Verdrängungskörpers veränderlich. Hierzu ist der Verdrängungskörper 1 als eine Art Balg ausgebildet und mit einer elastischen Oberfläche versehen. Wird nunmehr der Balg von innen mit einem entsprechenden Druck versorgt, der größer ist als der äußere Druck im Strömungsrohr, so dehnt sich der Balg aus und nimmt die mit der gestrichelten Linie 2 angedeutete Form an. Da die gesamte Turbine kreisrund ausgebildet ist und dies auch für den Balg gilt, ist die vergrößerte Querschnittsfläche des Verdrängungskörpers automatisch zu einer verringerten Querschnittsfläche für das Wasser innerhalb des Strömungsrohrs 3.

Diese verringerte Querschnittsströmungsfläche für das Wasser im Strömungsrohr führt automatisch zur Erhöhung der Strömungsgeschwindigkeit, so dass die gesamte Turbine schneller als zuvor angetrieben wird.

Die Dehnbarkeit des Verdrängungskörpers kann durch seine elastische Oberfläche ausgebildet werden und zur Ausdehnung des Balges kann es vorgesehen sein, dass ein Fluid in das Innere des Strömungskörpers bzw. Balges eingepumpt wird.

Somit kann mittels Einstellung des Querschnitts des Verdrängungskörpers auch die Drehgeschwindigkeit der gesamten Turbine auf einen gewünschten Wert für den jeweiligen Generator angepasst werden, so dass die Drehgeschwindigkeit der Turbine auf das Generatorsystem optimal angepasst ist und somit auch den bestmöglichen Wirkungsgrad erzielt.

Vorgestellte erfindungsgemäße Maßnahme ist äußerst einfach und gleichzeitig doch sehr effektiv.

Die Vorrichtung zur Arretierung und zur Lagerung der Turbine sind aus Übersichtsgründen in der Figur nicht dargestellt.

## Patentansprüche

1. Strömungsrohr (3) innerhalb dessen eine Turbine (4) bestehend aus einem Verdrängungskörper (1) auf dem außenseitig Schaufeln (5) aufgesetzt sind, angeordnet ist, wobei die Turbine bei Durchströmung des Strömungsrohrs (3) mittels eines Fluids in Drehung versetzt wird,
**dadurch gekennzeichnet, dass** der Verdrängungsköper (1) der Turbine (4) einen vergrößerbaren Querschnitt (2) aufweist, mittels dem der Durchströmungsquerschnitt innerhalb des Strömungsrohrs (3) entsprechend verringerbar ist.

2. Wasserkraftwerk mit mehreren Fallrohren, von denen wenigstens ein Fallrohr, wie das Strömungsrohr (3) nach Auspruch 1 ausgebildet ist.

## Claims

1. Flow pipe (3) within which is arranged a turbine (4) consisting of a displacement body (1) on which vanes (5) are mounted on the outside, the turbine being caused to rotate when a fluid flows through the flow pipe (3),
**characterised in that** the displacement body (1) of the turbine (4) has an enlargeable cross-section (2), by means of which the through-flow cross-section within the flow pipe (3) can be correspondingly reduced.

2. Hydroelectric power station comprising a plurality of downpipes of which at least one downpipe is of a design like the flow pipe (3) according to claim 1.

## Revendications

1. Tube d'écoulement (3) à l'intérieur duquel est disposée une turbine (4) se composant d'un corps déplaceur (1), sur lequel sont placées, côté extérieur, des aubes (5), la turbine étant amenée en rotation lorsque le tube d'écoulement (3) est traversé par un liquide,
**caractérisé en ce que** le corps déplaceur (1) de la turbine (4) présente une section transversale (2) pouvant être agrandie, au moyen de laquelle la section transversale d'écoulement à l'intérieur du tube d'écoulement (3) peut être réduite en conséquence.

2. Centrale hydraulique équipée de plusieurs tubes de descente, parmi lesquels au moins un tube de descente, tel que le tube d'écoulement (3), est conçu selon la revendication 1.
